Europäisches Patentamt

European Patent Office

Office européen des brevets

(19)

(11) **EP 0 827 256 B1**

(12) **FASCICULE DE BREVET EUROPEEN**

(45) Date de publication et mention
de la délivrance du brevet:
**07.05.2003 Bulletin 2003/19**

(51) Int Cl.⁷: **H02K 1/02**

(21) Numéro de dépôt: **97401960.6**

(22) Date de dépôt: **21.08.1997**

(54) **Moteur pas à pas pour horlogerie dont le stator est constitué d'un alliage magnétique doux résistant à la corrosion et alliage pour celui ci**

Schrittmotor für ein Uhrwerk mit Ständer der aus einer weichmagnetischen, korrosionsbeständigen Legierung hergestellt ist und Legierung dafür

Stepping motor for timepiece with stator made of a soft magnetic corrosion resistant alloy and alloy therefor

(84) Etats contractants désignés:
**CH DE FR GB LI**

(30) Priorité: **29.08.1996 FR 9610554**

(43) Date de publication de la demande:
**04.03.1998 Bulletin 1998/10**

(73) Titulaire: **IMPHY UGINE PRECISION**
**92800 Puteaux (FR)**

(72) Inventeurs:
• **Couderchon, Georges**
**58160 Sauvigny lès Bois (FR)**
• **Gautard, Dominique**
**58640 Varennes Vauzelles (FR)**
• **Chaput, Laurent**
**58160 Sauvigny lès Bois (FR)**
• **Coutu, Lucien**
**58160 Sauvigny lès Bois (FR)**

(74) Mandataire: **Plaisant, Sophie Marie**
**arcelor**
**Immeuble la Pacific**
**13, cours Valmy**
**92070 La Défense cédex (FR)**

(56) Documents cités:
**EP-A- 0 343 292       EP-A- 0 505 595**
**EP-A- 0 640 895       EP-A- 0 675 216**
**JP-A- 54 011 825**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## EP 0 827 256 B1

**Description**

L'invention est relative à un moteur pas à pas, utilisable notamment en horlogerie, du type comprenant un rotor, un stator et une bobine munie d'un noyau magnétique, ainsi qu'à des alliages magnétiques doux du type FeNiCr utilisables pour la fabrication de ces moteurs.

Le mouvement des aiguilles des montres à quartz analogiques est assuré par un moteur électrique pas à pas miniature, généralement du type LAVET. Un tel moteur comprend un rotor constitué par un aimant permanent, un stator à deux pôles et une bobine munie d'un noyau magnétique. Le stator peut être soit constitué de deux pièces, soit monobloc. Dans ce dernier cas, il est dit "à isthmes magnétiquement saturables". Les pièces constituant le stator et le noyau sont découpées dans des bandes laminées à froid d'alliages magnétiques doux du type FeNi dont les propriétés magnétiques sont adaptées à la fonction. L'épaisseur des bandes est de l'ordre de 0,4 à 0,8 mm. Le noyau est généralement en alliage de la famille Ni48Fe, et le stator, lorsqu'il est à isthmes magnétiquement saturables, est, le plus souvent, en alliage de la famille Ni80Mo5Fe. Ces alliages ont l'inconvénient d'être chers, et il est souhaitable de pouvoir disposer d'alliages moins coûteux. Ce problème est d'autant plus important que les montres à quartz sont devenues un produit de très grande consommation.

Pour résoudre ce problème il a été proposé d'utiliser un alliage de la famille Ni35Mo5Fe. Mais, cet alliage à l'inconvénient d'avoir des propriétés magnétiques très sensibles à la température entre - 20°C et 70°C c'est à dire sur la plage de températures d'utilisation des montres. Il en est de même avec les alliages Ni42Cr2Fe proposés dans EP 0 505 595.

Par ailleurs, les montres sont, de plus en plus souvent, soit assemblées, soit utilisées dans des régions du monde où les conditions climatiques sont très favorables à une dégradation par oxydation des composants. On peut, certes, effectuer des traitements anticorrosion, mais ces traitements sont coûteux, et il est souhaitable de pouvoir les éviter. Ce problème se pose particulièrement avec les alliages du type Ni35Mo5Fe, plus économiques que les alliages du type Ni80Mo5Fe, mais aussi, plus sensibles à la corrosion atmosphérique humide.

Le but de la présente invention est de remédier à ces inconvénients en proposant un alliage et un moteur pas à pas, utilisable, notamment, en horlogerie qui soit à la fois économique, peu oxydable et peu sensible aux variations de température.

A cet effet, l'invention a pour objet un moteur pas à pas du type comprenant un rotor, un stator et une bobine constituée d'un noyau magnétique et d'un enroulement, dont le stator, de préférence à isthmes magnétiquement saturables, est constitué d'un alliage magnétique doux du type FeNiCr dont la composition chimique comprend, en poids :

$$40 \ \% \leq Ni + Co \leq 60 \ \%$$

$$0 \ \% \leq Co \leq 7 \ \%$$

$$8 \ \% \leq Cr \leq 13,5 \ \%$$

$$8 \ \% \leq Cr + Mn + Si + Mo + Nb + V + W \leq 13,5 \ \%$$

le reste étant du fer et des impuretés résultant de l'élaboration.

De préférence, l'alliage magnétique doux du type FeNiCr dont est constitué le stator possède les caractéristiques suivantes :

- température de Curie $Tc > 200°C$
- induction à saturation Bs comprise entre 0,69 et 0,8 Tesla à + 25°C
- champ coercitif $Hc < 0,07$ oersteds (1 oersted = 79,577 A/m)
- résistivité électrique $\rho > 80 \ \mu\Omega cm$

De préférence, la composition chimique de l'alliage magnétique doux du type FeNiCr dont est constitué le stator est telle que :

$$53 \ \% \leq Ni + Co \leq 57 \ \%$$

$$0 \% \leq Co \leq 7 \%$$

$$9 \% \leq Cr \leq 11 \%$$

$$9 \% \leq Cr + Mn + Si + Mo + Nb + V + W \leq 11 \%$$

le reste étant du fer et des impuretés résultant de l'élaboration.

La composition chimique de l'alliage magnétique doux du type FeNiCr dont est constitué le stator peut, également, être telle que :

$$48,5 \% \leq Ni + Co \leq 51,5 \%$$

$$0 \% \leq Co \leq 7 \%$$

$$8 \% \leq Cr \leq 10 \%$$

$$0 \% \leq Mo \leq 1,5 \%$$

$$8 \% \leq Cr + Mn + Si + Mo + Nb + V + W \leq 12 \%$$

le reste étant du fer et des impuretés résultant de l'élaboration.

En outre, le noyau peut être en alliage FeNiCr dont la composition chimique comprend, en poids :

$$48,5 \% \leq Ni + Co \leq 51,5 \%$$

$$0 \% \leq Co \leq 7 \%$$

$$5 \% \leq Cr \leq 8 \%$$

$$5 \% \leq Cr + Mn + Si + Mo + Nb + V + W \leq 10 \%$$

le reste étant du fer et des impuretés résultant de l'élaboration.

L'invention concerne également un alliage magnétique doux du type FeNiCr dont la composition chimique comprend, en poids :

$$53 \% \leq Ni + Co \leq 57 \%$$

$$0 \% \leq Co \leq 7 \%$$

$$9 \% \leq Cr \leq 11 \%$$

$$9 \% \leq Cr + Mn + Si + Mo + Nb + V + W \leq 11 \%$$

le reste étant du fer et des impuretés résultant de l'élaboration.

De préférence, cet alliage contient de 0,1 % à 1 % de manganèse et de 0,05 % à 0,3 % de silicium ; de préférence également, il contient moins de 0,005 % d'oxygène et moins de 0,005 % de soufre.

L'invention concerne aussi un alliage magnétique doux du type FeNiCr dont la composition chimique comprend, en poids :

$$48,5 \% \leq Ni + Co \leq 51,5 \%$$

$$0 \% \leq Co \leq 7 \%$$

$$8 \% \leq Cr \leq 10 \%$$

$$0 \% \leq Mo \leq 1,5 \%$$

$$8 \% \leq Cr + Mn + Si + Al + Cu + Mo + Nb + V + W \leq 12 \%$$

le reste étant du fer et des impuretés résultant de l'élaboration.

De préférence, cet alliage contient de 0,1 % à 1 % de manganèse et de 0,05 % à 0,3 % de silicium ; de préférence également, il contient moins de 0,005 % d'oxygène et moins de 0,005 % de soufre.

L'invention va maintenant être décrite de façon plus précise, mais non limitative, en regard de l'unique figure qui représente schématiquement un moteur pas à pas pour horlogerie.

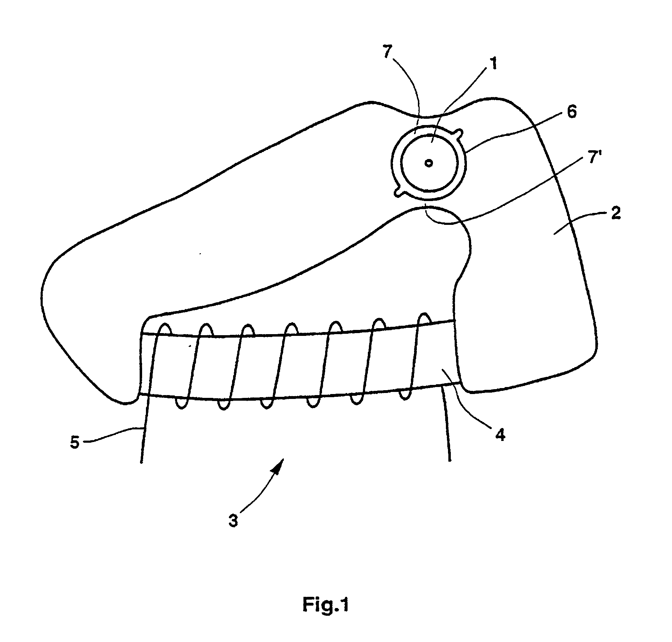

Le moteur du type LAVET, à isthmes magnétiquement saturables, représenté à la figure 1 comprend un rotor 1 constitué d'un aimant permanent, par exemple en samarium-cobalt, d'un stator 2 et d'une bobine 3 constituée d'un noyau magnétique 4 et d'un enroulement 5. Le stator 2 comporte un évidement 6 dans lequel est logé le rotor 1. De chaque côté de l'évidement 6, le stator 2 comporte deux rétrécissements 7 et 7' appelés "isthmes". Les isthmes sont dits "magnétiquement saturables" lorsque leur géométrie et la nature du matériau qui constitue le stator sont tels qu'au cours du fonctionnement du moteur, l'induction magnétique qui les traverse est voisine de l'induction à saturation du matériau.

Au repos, c'est à dire, lorsqu'aucun courant électrique parcourt le bobinage, la position du rotor est définie par la géométrie du stator, et en particulier de l'évidement 6 dans lequel est logé le rotor. Cette position est telle que la réluctance résultant de l'interaction magnétique du rotor et du circuit magnétique constitué par le stator 2 et le noyau 4 de la bobine 3 soit minimale. Toutes les secondes, une impulsion électrique est envoyée dans le bobinage 5. Cette impulsion électrique engendre un champ magnétique qui fait tourner le rotor d'un demi tour. L'énergie électrique est fournie par une pile.

Pour que le moteur ait un fonctionnement satisfaisant, le circuit magnétique constitué par le stator 2 et le noyau 4 doit être constitué de matériaux dont la perméabilité magnétique est élevée, le champ coercitif faible et la résistivité électrique élevée, afin de minimiser la consommation électrique et ainsi obtenir une durée de vie de la pile la plus longue possible. Afin de maximiser la puissance massique, et donc de minimiser la dimension du moteur, l'induction à saturation des matériaux doit être élevée, cependant, l'induction à saturation du matériau constituant le stator ne doit pas être trop élevée, de façon à faciliter la saturation magnétique des isthmes par les impulsions d'excitation. Enfin, ces propriétés doivent rester le plus stable possible sur toute la plage de température de fonctionnement du moteur, cette plage est habituellement de - 20°C à + 70°C.

Le stator 2 est en alliage magnétique doux du type FeNiCr qui contient, en poids :

- de 40% à 60% de nickel qui peut être partiellement substitué par du cobalt en une teneur pouvant atteindre 7%, la somme nickel plus cobalt restant comprise entre 40% et 60%; ces éléments sont destinés à conférer les principales caractéristiques magnétiques et une température de Curie suffisante;
- de 8% à 13,5% de chrome, pour obtenir une bonne résistance à l'oxydation, et plus particulièrement à la corrosion atmosphérique humide;
- du manganèse, de préférence de 0,1% à 1%, afin d'obtenir une bonne aptitude à la transformation à chaud par laminage ;
- du silicium, de préférence de 0,05% à 0,3%, pour assurer la desoxydation au cours de l'élaboration ;
- éventuellement un ou plusieurs éléments pris parmi le molybdène, le niobium, le vanadium et le tungstène, en des teneurs telles que la somme de ces teneurs reste inférieure à 3% ; ces éléments améliorent la résistance à la corrosion et la résistance mécanique à chaud, ce qui facilite les opérations de fabrication des composants des moteurs pas à pas, mais, en trop grande quantité, ils abaissent de façon trop importante l'induction à saturation Bs ;

le reste étant du fer et des impuretés résultant de l'élaboration.

Afin d'obtenir une induction à saturation Bs suffisante, la somme Cr + Mn + Si + Mo + Nb + V + W doit rester inférieure à 13,5 % (du fait de la teneur en chrome minimale, cette somme est supérieure à 8%).

Les impuretés résultant de l'élaboration sont, notamment, l'oxygène, le soufre qui ont un effet défavorable sur le champ coercitif. Aussi, la teneur en chacune de ces impuretés doit être la plus faible possible, et, de préférence, inférieure à 50 ppm.

Il est souhaitable que la composition chimique soit ajustée pour que l'alliage ait les caractéristiques suivantes :

- température de Curie Tc > 200°C, et de préférence Tc > 250°C, pour obtenir une bonne stabilité des caractéristiques magnétiques entre- 20°C et + 70°C,
- induction à saturation Bs comprise entre 0,6 et 0,9 Tesla à la température ambiante, et, de préférence, comprise entre 0,69 et 0,8 Tesla à + 25 °C,
- champ coercitif Hc < 0,07 oersteds,
- résistivité électrique $\rho$ > 80 $\mu\Omega$cm

Cet ajustement de la composition chimique peut être faite par l'Homme du Métier en tenant compte du fait que :

- Bs décroit lorsque la teneur en éléments non ferromagnétiques (autres éléments que Fe, Ni et Co) augmente ;
- Hc augmente lorsque les teneurs en impuretés augmente ;
- $\rho$ croît généralement lorsque la teneur en éléments non ferromagnétiques augmente ;
- Tc décroit lorsque la teneur en éléments non ferromagnétiques augmente ;

Par exemple, et de préférence, la composition de l'alliage peut être telle que :

$$53 \% \leq Ni + Co \leq 57 \%$$

$$0 \% \leq Co \leq 7 \%$$

$$9 \% \leq Cr \leq 11 \%$$

$$9 \% \leq Cr + Mn + Si + Al + Cu + Mo + Nb + V + W \leq 11 \%$$

le reste étant du fer et des impuretés résultant de l'élaboration.

Cette composition chimique (du type Ni55Cr10Fe) a l'avantage d'avoir simultanément une induction à saturation convenable ( de l'ordre de 0,7 Tesla) et une forte teneur en chrome qui confère une bonne résistance à la corrosion.

On peut également utiliser un alliage dont la composition est telle que :

$$48,5 \% \leq Ni + Co \leq 51,5 \%$$

$$0 \% \leq Co \leq 7 \%$$

$$8 \% \leq Cr \leq 10 \%$$

$$0 \% \leq Mo \leq 1,5 \%$$

$$8\ \% \leq Cr + Mn + Si + Al + Cu + Mo + Nb + V + W \leq 12\ \%$$

le reste étant du fer et des impuretés résultant de l'élaboration.

Cet alliage présente l'avantage d'avoir une résistance à la corrosion améliorée par la présence de molybdène.

Dans tous les cas, le noyau 4 de la bobine 3 peut, avantageusement, être constitué d'un alliage soit du type Ni48Fe, soit du type FeNiCr de composition :

$$48,5\ \% \leq Ni + Co \leq 51,5\ \%$$

$$0\ \% \leq Co \leq 7\ \%$$

$$5\ \% \leq Cr \leq 8\ \%$$

$$5\ \% \leq Cr + Mn + Si + Al + Cu + Mo + Nb + V + W \leq 10\ \%$$

le reste étant du fer et des impuretés résultant de l'élaboration.

Cet alliage présente l'avantage de présenter à la fois une induction à saturation très élevée (1 Tesla) et une résistance à la corrosion acceptable malgré une teneur en chrome réduite.

Lorsque le stator est en alliage dont la composition est telle que :

$$48,5\ \% \leq Ni + Co \leq 51,5\ \%$$

$$0\ \% \leq Co \leq 7\ \%$$

$$8\ \% \leq Cr \leq 10\ \%$$

$$0\ \% \leq Mo \leq 1,5\ \%$$

$$8\ \% \leq Cr + Mn + Si + Al + Cu + Mo + Nb + V + W \leq 12\ \%$$

le reste étant du fer et des impuretés résultant de l'élaboration, le noyau de la bobine peut être réalisé avec le même alliage, ce qui permet de fabriquer le stator et le noyau en une seule pièce, et, ainsi, de simplifier cette fabrication.

A titre de premier exemple, on a fabriqué une bande laminée à froid de 0,5 mm d'épaisseur à partir d'une bande laminée à chaud de 4 mm d'épaisseur. Lors du laminage à froid, la bande a été recuite à l'épaisseur intermédiaire de 1,5 mm. La composition était (en % en poids) :

| Ni | Cr | Mo | Mn | Si | Fe |
|----|----|----|----|----|----|
| 55 | 10 | 0 | 0,3 | 0,1 | reste |

Cet alliage avait les caractéristiques suivantes, mesurées sur des rondelles découpées dans la bande laminée à froid et recuites à 1100°C pendant 4 heures sous hydrogène pur et sec :

- induction à saturation Bs : 0,77 Tesla à - 20°C ; 0,75 T à + 25°C ; 0,70 T à + 70°C ;
- Température de Curie Tc : 275°C ;
- champ coercitif Hc : 0,06 oersteds à 25°C;
- résistivité électrique $\rho$ : 90 $\mu\Omega$cm à 25°C.

Ces caractéristiques sont particulièrement adaptées à la fabrication d'un stator de moteur du type LAVET à isthmes saturés. De plus, du fait de la teneur en chrome importante, cet alliage à une tenue a la corrosion qui le rend apte à l'utilisation pour la fabrication de moteurs de montre sans traitement anticorrosion préalable. Cette résistance à la corrosion peut être mise en évidence, par exemple en soumettant un échantillon à une alternance de maintiens pendant 2 à 4 heures à une température comprise entre 60°C et 70°C dans une atmosphère ayant un taux d'humidité supérieur à 80%, et de maintiens pendant 2 à 4 heures à une température comprise entre - 10°C et - 20°C ; la durée totale des maintiens étant comprise entre 2 et 4 semaines. Avec ce test on a constaté que l'alliage du type Ni55Cr10Fe ne présente pas de trace visible de rouille alors que l'alliage du type Ni48Fe en présente.

A titre de deuxième exemple, on a fabriqué une bande laminée à froid de 0,45 mm d'épaisseur à partir d'une bande laminée à chaud de 4 mm d'épaisseur. Lors du laminage à froid, la bande a été recuite à l'épaisseur intermédiaire de 1,4 mm. La composition était (en % en poids) :

| Ni | Cr | Mo | Mn | Si | Fe |
|---|---|---|---|---|---|
| 50 | 9 | 1 | 0,3 | 0,1 | reste |

Cet alliage avait les caractéristiques suivantes, mesurées sur des rondelles découpées dans la bande laminée à froid et recuites à 1100°C pendant 4 heures sous hydrogène pur et sec :

- induction à saturation Bs : 0,76 Tesla à - 20°C ; 0,75 T à + 25°C ; 0,72 T à + 70°C ;
- Température de Curie Tc : 275°C ;
- champ coercitif Hc : 0,05 oersteds à 25°C;
- résistivité électrique $\rho$ : 90 $\mu\Omega$cm à 25°C.

Ces caractéristiques sont particulièrement adaptées à la fabrication d'un stator de moteur du type LAVET à isthmes saturés. De plus, des essais comparatifs ont montré que cet alliage avait une tenue à la corrosion humide légèrement améliorée.

A titre de troisième exemple, on a fabriqué une bande laminée à froid de 0,65 mm d'épaisseurà partir d'une bande laminée à chaud de 4 mm d'épaisseur. Lors du laminage à froid, la bande a été recuite à l'épaisseur intermédiaire de 1,6 mm. La composition était (en % en poids) :

| Ni | Cr | Mo | Mn | Si | Fe |
|---|---|---|---|---|---|
| 45 | 9 | 1 | 0,3 | 0,1 | reste |

Cet alliage avait les caractéristiques suivantes :

- induction à saturation Bs : 0,71 Tesla à - 20°C ; 0,69 T à + 25°C ; 0,67 T à + 70°C ;
- Température de Curie Tc : 260°C ;
- champ coercitif Hc : 0,06 oersteds à 25°C;
- résistivité électrique $\rho$ : 90 $\mu\Omega$cm à 25°C.

Cet alliage présente une tenue à la corrosion identique à celle de l'exemple précédant, mais, du fait de la teneur en nickel un peu plus faible, la température de curie et l'induction à saturation sont également un peu plus faibles.

**Revendications**

1. Moteur pas à pas du type comprenant un rotor (1), un stator (2) et une bobine (3) constituée d'un noyau (4) magnétique et d'un enroulement (5), **caractérisé en ce que** le stator (2) est constitué d'un alliage magnétique doux du type FeNiCr dont la composition chimique comprend, en poids :

$$40 \% \leq Ni + Co \leq 60 \%$$

$$0 \% \leq Co \leq 7 \%$$

$$8 \ \% \leq Cr \leq 13,5 \ \%$$

$$8 \ \% \leq Cr + Mn + Si + Mo + Nb + V + W \leq 13,5 \ \%$$

le reste étant du fer et des impuretés résultant de l'élaboration.

**2.** Moteur selon la revendication 1 **caractérisé en ce que** l'alliage magnétique doux du type FeNiCr dont est constitué le stator (2) possède les caractéristiques suivantes :

- température de Curie Tc > 200°C
- induction à saturation Bs comprise entre 0,69 et 0,8 Tesla à + 25°C
- champ coercitif Hc < 0,07 oersteds
- résistivité électrique $\rho$ > 80 $\mu\Omega$cm

**3.** Moteur selon la revendication 1 **caractérisé en ce que** la composition chimique de l'alliage magnétique doux du type FeNiCr dont est constitué le stator est telle que :

$$53 \ \% \leq Ni + Co \leq 57 \ \%$$

$$0 \ \% \leq Co \leq 7 \ \%$$

$$9 \ \% \leq Cr \leq 11 \ \%$$

$$9 \ \% \leq Cr + Mn + Si + Mo + Nb + V + W \leq 11 \ \%$$

le reste étant du fer et des impuretés résultant de l'élaboration.

**4.** Moteur selon la revendication 1 **caractérisé en ce que** la composition chimique de l'alliage magnétique doux du type FeNiCr dont est constitué le stator (2) est telle que :

$$48,5 \ \% \leq Ni + Co < 51,5 \ \%$$

$$0 \ \% \leq Co \leq 7 \ \%$$

$$8 \ \% \leq Cr \leq 10 \ \%$$

$$0 \ \% \leq Mo \leq 1,5 \ \%$$

$$8 \ \% \leq Cr + Mn + Si + Mo + Nb + V + W \leq 12 \ \%$$

le reste étant du fer et des impuretés résultant de l'élaboration.

**5.** Moteur selon l'une quelconque des revendications 1 à 4 **caractérisé en ce que** le stator (2) est à isthmes magnétiquement saturables.

**6.** Moteur selon l'une quelconque des revendications 1 à 5 **caractérisé en ce que**, en outre, le noyau (4) est en alliage FeNiCr dont la composition chimique comprend, en poids :

$$48,5 \% \leq Ni + Co \leq 51,5 \%$$

$$0 \% \leq Co \leq 7 \%$$

$$5 \% \leq Cr \leq 8 \%$$

$$5 \% \leq Cr + Mn + Si + Mo + Nb + V + W \leq 10 \%$$

le reste étant du fer et des impuretés résultant de l'élaboration.

**7.** Alliage magnétique doux du type FeNiCr pour la fabrication d'un moteur pas à pas selon l'une quelconque des revendications 1 à 6 dont la composition chimique comprend, en poids :

$$53 \% \leq Ni + Co \leq 57 \%$$

$$0 \% \leq Co \leq 7 \%$$

$$9 \% \leq Cr \leq 11 \%$$

$$9 \% \leq Cr + Mn + Si + Mo + Nb + V + W \leq 11 \%$$

le reste étant du fer et des impuretés résultant de l'élaboration.

**8.** Alliage selon la revendication 7 **caractérisé en ce que** :

$$0,1 \% \leq Mn \leq 1 \%$$

$$0,05 \% \leq Si \leq 0,3 \%$$

**9.** Alliage selon la revendication 7 ou la revendication 8 **caractérisé en ce que**:

$$O < 0,005 \%$$

$$S < 0,005 \%$$

**10.** Alliage magnétique doux du type FeNiCr pour la fabrication d'un moteur pas à pas selon l'une quelconque des revendications 1 à 6 dont la composition chimique comprend, en poids :

$$48,5 \% \leq Ni + Co \leq 51,5 \%$$

$$0 \% \leq Co \leq 7 \%$$

$$8 \% \leq Cr \leq 10 \%$$

$$0 \% \leq Mo \leq 1,5 \%$$

$$8 \% \leq Cr + Mn + Si + Mo + Nb + V + W \leq 12 \%$$

le reste étant du fer et des impuretés résultant de l'élaboration.

**11.** Alliage selon la revendication 10 **caractérisé en ce que** :

$$0,1 \% \leq Mn \leq 1 \%$$

$$0,05 \% \leq Si \leq 0,3 \%$$

**12.** Alliage selon la revendication 10 ou la revendication 11 **caractérisé en ce que** : O < 0,005 % et S < 0,005 %.

**Claims**

**1.** Stepper motor of the type comprising a rotor (1), a stator (2) and a coil (3) consisting of a magnetic core (4) and of a winding (5), **characterized in that** the stator (2) consists of a soft magnetic alloy of the FeNiCr type, the chemical composition of which includes, by weight:

$$40\% \leq Ni + Co \leq 60\%$$

$$0\% \leq Co \leq 7\%$$

$$8\% \leq Cr \leq 13.5\%$$

$$8\% \leq Cr + Mn + Si + Mo + Nb + V + W \leq 13.5\%,$$

the balance being iron and impurities resulting from the smelting.

**2.** Motor according to Claim 1, **characterized in that** the soft magnetic alloy of the FeNiCr type of which the stator (2) consists has the following characteristics:

- Curie temperature Tc > 200°C
- saturation induction Bs of between 0.69 and 0.8 tesla at +25°C
- coercive field Hc < 0.07 oersteds
- electrical resistivity $\rho$ > 80 $\mu\Omega$.cm.

**3.** Motor according to Claim 1, **characterized in that** the chemical composition of the soft magnetic alloy of the FeNiCr type of which the stator consists is such that:

$$53\% \leq Ni + Co \leq 57\%$$

$$0\% \leq Co \leq 7\%$$

$$9\% \leq Cr \leq 11\%$$

...

$$9\% \leq Cr + Mn + Si + Mo + Nb + V + W \leq 11\%,$$

the balance being iron and impurities resulting from the smelting.

4. Motor according to Claim 1, **characterized in that** the chemical composition of the soft magnetic alloy of the FeNiCr type of which the stator (2) consists is such that :

$$48.5\% \leq Ni + Co \leq 51.5\%$$

$$0\% \leq Co \leq 7\%$$

$$8\% \leq Cr \leq 10\%$$

$$0\% \leq Mo \leq 1.5\%$$

$$8\% \leq Cr + Mn + Si + Mo + Nb + V + W \leq 12\%,$$

the balance being iron and impurities resulting from the smelting.

5. Motor according to any one of Claims 1 to 4, **characterized in that** the stator (2) is with magnetically saturable isthmuses.

6. Motor according to any one of Claims 1 to 5, **characterized in that**, in addition, the core (4) is made of FeNiCr alloy the chemical composition of which includes, by weight:

$$48.5\% \leq Ni + Co \leq 51.5\%$$

$$0\% \leq Co \leq 7\%$$

$$5\% \leq Cr \leq 8\%$$

$$5\% \leq Cr + Mn + Si + Mo + Nb + V + W \leq 10\%,$$

the balance being iron and impurities resulting from the smelting.

7. Soft magnetic alloy of the FeNiCr type for the manufacture of a stepper motor according to any one of Claims 1 to 6, the chemical composition of which includes, by weight:

$$53\% \leq Ni + Co \leq 57\%$$

$$0\% \leq Co \leq 7\%$$

$$9\% \leq Cr \leq 11\%$$

$$9\% \leq Cr + Mn + Si + Mo + Nb + V + W \leq 11\%,$$

the balance being iron and impurities resulting from the smelting.

8. Alloy according to Claim 7, **characterized in that**:

$$0.1\% \leq Mn \leq 1\%$$

$$0.05\% \leq Si \leq 0.3\%.$$

9. Alloy according to Claim 7 or Claim 8, **characterized in that** :

$$O < 0.005\%$$

$$S < 0.005\%.$$

10. Soft magnetic alloy of the FeNiCr type for the manufacture of a stepper motor according to any one of Claims 1 to 6, the chemical composition of which includes, by weight:

$$48.5\% \leq Ni + Co \leq 51.5\%$$

$$0\% \leq Co \leq 7\%$$

$$8\% \leq Cr \leq 10\%$$

$$0\% \leq Mo \leq 1.5\%$$

$$8\% \leq Cr + Mn + Si + Mo + Nb + V + W \leq 12\%,$$

the balance being iron and impurities resulting from the smelting.

11. Alloy according to Claim 10, **characterized in that**:

$$0.1\% \leq Mn \leq 1\%$$

$$0.05\% \leq Si \leq 0.3\%.$$

12. Alloy according to Claim 10 or Claim 11, **characterized in that**: O < 0.005% and S < 0.005%.

**Patentansprüche**

1. Schrittmotor des Typs, der einen Rotor (1), einen Stator (2) und eine Spule (3) enthält, welche aus einem magnetischen Kern (4) und einer Wicklung (5) besteht, **dadurch gekennzeichnet, dass** der Stator (2) aus einer weichmagnetischen Legierung vom Typ FeNiCr besteht, deren chemische Zusammensetzung in Gewichtsprozent umfasst:

$$40 \% \leq Ni + Co \leq 60 \%,$$

$$0 \% \leq Co \leq 7 \%,$$

$$8 \% \leq Cr \leq 13{,}5 \%,$$

$$8 \% \leq Cr + Mn + Si + Mo + Nb + V + W \leq 13{,}5 \%,$$

wobei der Rest aus Eisen und aus der Verarbeitung stammenden Verunreinigungen besteht.

2. Motor nach Anspruch 1, **dadurch gekennzeichnet, dass** die weichmagnetische Legierung vom Typ FeNiCr, aus der der Stator (2) besteht, die folgenden Eigenschaften aufweist:

- Curie-Temperatur Tc > 200 °C,
- Sättigungsinduktion Bs bei 25 °C im Bereich von 0,69 bis 0,8 Tesla,
- Koerzitiffeld Hc < 0,07 Oersted,
- elektrischer Widerstand $\rho$ > 80 $\mu\Omega$cm.

3. Motor nach Anspruch 1, **dadurch gekennzeichnet, dass** die chemische Zusammensetzung der weichmagnetischen Legierung vom Typ FeNiCr, aus der der Stator (2) besteht, so ist, dass:

$$53 \% \leq Ni + Co \leq 57 \%,$$

$$0 \% \leq Co \leq 7 \%,$$

$$9 \% \leq Cr \leq 11 \%,$$

$$9 \% \leq Cr + Mn + Si + Mo + Nb + V + W \leq 11\%,$$

wobei der Rest aus Eisen und aus der Verarbeitung stammenden Verunreinigungen besteht.

4. Motor nach Anspruch 1, **dadurch gekennzeichnet, dass** die chemische Zusammensetzung der weichmagnetischen Legierung vom Typ FeNiCr, aus der der Stator (2) besteht, so ist, dass:

$$48{,}5 \% \leq Ni + Co \leq 51{,}5 \%,$$

$$0 \% \leq Co \leq 7 \%,$$

$$8 \% \leq Cr \leq 10 \%,$$

$$0 \% \leq Mo \leq 1{,}5 \%,$$

$$8 \% \leq Cr + Mn + Si + Mo + Nb + V + W \leq 12 \%,$$

wobei der Rest aus Eisen und aus der Verarbeitung stammenden Verunreinigungen besteht.

**5.** Motor nach einem der Ansprüche 1 bis 4, **dadurch gekennzeichnet, dass** der Stator (2) Verengungen aufweist, die magnetisch gesättigt werden können.

**6.** Motor nach einem der Ansprüche 1 bis 5, **dadurch gekennzeichnet, dass** ferner der Kern (4) aus einer FeNiCr-Legierung besteht, deren chemische Zusammensetzung in Gewichtsprozent umfasst:

$$48,5 \% \leq Ni + Co \leq 51,5 \%,$$

$$0 \% \leq Co \leq 7 \%,$$

$$5 \% \leq Cr \leq 8 \%,$$

$$5 \% \leq Cr + Mn + Si + Mo + Nb + V + W \leq 10 \%,$$

wobei der Rest aus Eisen und aus der Verarbeitung stammenden Verunreinigungen besteht.

**7.** Weichmagnetische Legierung vom Typ FeNiCr zur Herstellung eines Schrittmotors nach einem der Ansprüche 1 bis 6, deren chemische Zusammensetzung in Gewichtsprozent umfasst:

$$53 \% \leq Ni + Co \leq 57 \%,$$

$$0 \% \leq Co \leq 7 \%,$$

$$9 \% \leq Cr \leq 11 \%,$$

$$9 \% \leq Cr + Mn + Si + Mo + Nb + V + W \leq 11 \%,$$

wobei der Rest aus Eisen und aus der Verarbeitung stammenden Verunreinigungen besteht.

**8.** Legierung nach Anspruch 7, **dadurch gekennzeichnet, dass**:

$$0,1 \% \leq Mn \leq 1 \%,$$

$$0,05 \% \leq Si \leq 0,3 \%.$$

**9.** Legierung nach Anspruch 7 oder Anspruch 8, **dadurch gekennzeichnet, dass**:

$$O < 0,005 \%,$$

$$S < 0,005 \%.$$

**10.** Weichmagnetische Legierung vom Typ FeNiCr zur Herstellung eines Schrittmotors nach einem der Ansprüche 1 bis 6, deren chemische Zusammensetzung in Gewichtsprozent umfasst:

$$48,5 \% \leq Ni + Co \leq 51,5 \%,$$

$$0 \% \leq Co \leq 7 \%,$$

$$8 \% \leq Cr \leq 10 \%,$$

$$0 \% \leq Mo \leq 1,5 \%,$$

$$8 \% \leq Cr + Mn + Si + Mo + Nb + V + W \leq 12 \%,$$

wobei der Rest aus Eisen und aus der Verarbeitung stammenden Verunreinigungen besteht.

11. Legierung nach Anspruch 10, **dadurch gekennzeichnet, dass**:

$$0,1 \% \leq Mn \leq 1 \%,$$

$$0,05 \% \leq Si \leq 0,3 \%.$$

12. Legierung nach Anspruch 10 oder Anspruch 11, **dadurch gekennzeichnet, dass**:

$$O < 0,005 \%,$$

$$S < 0,005 \%.$$

**Fig.1**